Europäisches Patentamt

European Patent Office

Office européen des brevets

(11) Veröffentlichungsnummer : **0 504 131 A1**

## (12) EUROPÄISCHE PATENTANMELDUNG

(21) Anmeldenummer : 92890051.3

(22) Anmeldetag : 06.03.92

(51) Int. Cl.$^5$ : **B01D 53/34,** B01J 38/14, C02F 1/58

(30) Priorität : 08.03.91 AT 500/91

(43) Veröffentlichungstag der Anmeldung : **16.09.92 Patentblatt 92/38**

(84) Benannte Vertragsstaaten : **CH DE FR GB IT LI NL SE**

(71) Anmelder : **TECHFORM ENGINEERING GmbH Kaltenbrunnerstrasse 11 W-7753 Allensbach (DE)**

(72) Erfinder : **Hörler, Stefan Landstrasse 157 CH-7250 Klosters (CH)**

(74) Vertreter : **Wildhack, Helmut, Dr. Dipl.-Ing. et al Patentanwälte Dipl.-Ing. Leo Brauneiss Dipl.-Ing. Dr. Helmut Wildhack Landstrasser Hauptstrasse 50 Postfach 281 A-1031 Wien (AT)**

(54) **Verringerung von bei industriellen Prozessen anfallenden Schadstoffen.**

(57) Die Erfindung betrifft ein Verfahren und eine Anlage zur Verringerung, und/oder Beseitigung von bei Verbrennungs- und/oder industriellen und/oder Umweltentlastungs-Prozessen anfallenden Schadstoffen, insbesondere aus der Gruppe Stickstoffoxide, Ammoniak und Ammonium, wobei in Abgasen von Verbrennungsprozessen enthaltene Stickstoffoxide mit im wesentlichen Wässern und/oder Abwässern entzogenem Ammoniak bei erhöhter Temperatur zu Nicht-Schadstoffen umgesetzt werden, welches bzw. welche dadurch gekennzeichnet ist, daß mindestens ein

— in einer ersten Verfahrensstufe durch intensives In-Kontakt-Bringen mit Ammoniak und/oder Ammonium-Ionen generierendem und/oder solche enthaltendem, zu de-ammonisierenden Wasser und/oder Abwasser schließlich mit Ammonium-Ionen zumindest zum Teil beladenes, Ionenaustauschfähiges, anorganisches Struktur-Material (anorganischer Ionentauscher), insbesondere natürlicher Zeolith,

— in einer zweiten Verfahrensstufe als Lieferant von und/oder Ausgangsmaterial für mit einem zu de-(NO$_x$)ierenden Abgas und/oder Rauchgas eines Oxidations- bzw. Verbrennungsprozesses in Kontakt und mit darin enthaltenen Stickstoffoxiden zur Umsetzung zu bringendes Ammonium und/oder Ammoniak eingesetzt wird.

Fig. 1

EP 0 504 131 A1

Die Erfindung betrifft die Verringerung, Umwandlung und/oder Beseitigung von bei Verbrennungs- und/oder industriellen und/oder Umweltentlastungs-Prozessen anfallenden Schadstoffen, insbesondere aus der Gruppe Stickstoffoxide, Ammoniak und Ammonium.

Die in den letzten Jahren ständig zunehmenden Nitratkonzentrationen in vielen Nahrungsmittel-Pflanzen und im Trinkwasser haben dazu geführt, intensiv danach zu forschen, den Eintrag dieses gesundheitsgefährdenden Stoffes in die Umwelt einzuschränken. Es wurde gefunden, daß ein großer Teil dieses Nitrates erst in der Natur selbst aus Ammonium gebildet wird. Es ist also von hohem Interesse, die unkontrolliert in die Umwelt verfrachtete Menge an Ammonium einzudämmen. Einen wesentlichen Beitrag können dazu Kläranlagen leisten. Wässer, die in die Kläranlagen eintreten, haben oft einen Ammoniumgehalt, der die gesetzlichen Grenzwerte um das Zehnfache überschreitet. In großem Maße wird dieses Ammonium mit Hilfe des sogenannten "Denitrifikations-Verfahrens" aus dem Klärwasser entfernt, welches einen immensen Sauerstoffbedarf aufweist und gleichzeitig das bereits erwähnte unerwünschte Nitrat liefert. Gerade in neuerer Zeit sind viele dieser Anlagen durch den erhöhten Ammoniumzufluß an der Grenze ihrer Kapazität angelangt. Dies bedingt, daß bestehende Anlagen vergrößert werden müssen oder aber, daß neue Verfahren entwickelt werden müssen, um diesem schwerwiegenden Problem abzuhelfen.

Das für eine De-Ammonisierung von Wässern mit hohen Ammoniumgehalten von etwa 300 bis 1000 mg/l bekanntgewordene und in der Praxis angewandte Ammoniumstripping beruht darauf, daß bei pH-Werten von 11 und höher Ammonium als Ammoniak in Form von gelöstem Gas vorliegt. Durch Erhöhung der Temperatur des zu strippenden Abwassers wird eine Mobilisierung des Ammoniakgases erreicht. Das Stripping kann nach zweierlei Methoden erfolgen:

Beim Stripping mit Luft wird durch das alkalisierte und erwärmte Abwasser Luft geleitet, welche das gelöste Ammoniakgas mitreißt und aus dem Wasser entfernt. Die mit Ammoniak beladene Luft wird durch ein Säurebad geleitet, wobei aus dem Ammoniak ein der jeweils verwendeten Säure entsprechendes Ammoniumsalz gebildet wird, das z.B. für Düngemittel verwendbar ist. Durch Kreislaufführung der Strip-Luft werden Geruchsemissionen verhindert. Das Abwasser verläßt die Strippereinheit mit einem Restammoniumanteil von etwa 2 bis 5% des ursprünglichen Anteils.

Das Stripping mit Dampf läuft großteils analog zu demjenigen mit Luft ab. Es wird mit Wasserdampf gestrippt und der beladene Dampf kann dann in ein Säurebad geführt oder kondensiert werden, kann jedoch nicht im Kreislauf gefahren werden. Der Vorteil des Dampfstrippings besteht darin, daß bei der Verringerung, Umwandlung und/oder Beseitigung von bei Verbrennungs- und/oder industriellen und/oder Umweltentlastungs- Prozessen anfallenden Schadstoffen

Die Erfindung betrifft die Verringerung, Umwandlung und/oder Beseitigung von bei Verbrennungs- und/oder industriellen und/oder Umweltentlastungs-Prozessen anfallenden Schadstoffen, insbesondere aus der Gruppe Stickstoffoxide, Ammoniak und Ammonium.

Die in den letzten Jahren ständig zunehmenden Nitratkonzentrationen in vielen Nahrungsmittel-Pflanzen und im Trinkwasser haben dazu geführt, intensiv danach zu forschen, den Eintrag dieses gesundheitsgefährdenden Stoffes in die Umwelt einzuschränken. Es wurde gefunden, daß ein großer Teil dieses Nitrates erst in der Natur selbst aus Ammonium gebildet wird. Es ist also von hohem Interesse, die unkontrolliert in die Umwelt verfrachtete Menge an Ammonium einzudämmen. Einen wesentlichen Beitrag können dazu Kläranlagen leisten. Wässer, die in die Kläranlagen eintreten, haben oft einen Ammoniumgehalt, der die gesetzlichen Grenzwerte um das Zehnfache überschreitet. In großem Maße wird dieses Ammonium mit Hilfe des sogenannten "Denitrifikations-Verfahrens" aus dem Klärwasser entfernt, welches einen immensen Sauerstoffbedarf aufweist und gleichzeitig das bereits erwähnte unerwünschte Nitrat liefert. Gerade in neuerer Zeit sind viele dieser Anlagen durch den erhöhten Ammoniumzufluß an der Grenze ihrer Kapazität angelangt. Dies bedingt, daß bestehende Anlagen vergrößert werden müssen oder aber, daß neue Verfahren entwickelt werden müssen, um diesem schwerwiegenden Problem abzuhelfen.

Das für eine De-Ammonisierung von Wassern mit hohen Ammoniumgehalten von etwa 300 bis 1000 mg/l bekanntgewordene und in der Praxis angewandte Ammoniumstripping beruht darauf, daß bei pH-Werten von 11 und höher Ammonium als Ammoniak in Form von gelöstem Gas vorliegt. Durch Erhöhung der Temperatur des zu strippenden Abwassers wird eine Mobilisierung des Ammoniakgases erreicht. Das Stripping kann nach zweierlei Methoden erfolgen:

Beim Stripping mit Luft wird durch das alkalisierte und erwärmte Abwasser Luft geleitet, welche das gelöste Ammoniakgas mitreißt und aus dem Wasser entfernt. Die mit Ammoniak beladene Luft wird durch ein Säurebad geleitet, wobei aus dem Ammoniak ein der jeweils verwendeten Säure entsprechendes Ammoniumsalz gebildet wird, das z.B. für Düngemittel verwendbar ist. Durch Kreislaufführung der Strip-Luft werden Geruchsemissionen verhindert. Das Abwasser verläßt die Strippereinheit mit einem Restammoniumanteil von etwa 2 bis 5% des ursprünglichen Anteils.

Das Stripping mit Dampf läuft großteils analog zu demjenigen mit Luft ab. Es wird mit Wasserdampf gestrippt und der beladene Dampf kann dann in ein Säurebad geführt oder kondensiert werden, kann jedoch nicht im Kreislauf gefahren werden. Der Vorteil des Dampfstrippings besteht darin, daß bei der Kondensation des Stripp-Dampfes Ammoniaklösung erhalten wird. Dies kann interessant werden, wenn sich eine Kehrichtverbrennungsanlage in der Nähe befindet, welche mit einem De(NO$_x$)ierungs- -(DENOX)- Verfahren auf Ammoniakbasis arbeitet. So könnte das herausgestrippte Ammonium schnell und unabhängig von jeglicher Marktlage direkt weiterverwendet werden.

Dementsprechend wurde versucht, das aus der Abwasserbehandlung gewonnene Ammonium nicht nur für die für die Umwelt aus Gründen der Nitratbildung nicht unproblematischen Ammonsalz-Dünger zu verwenden, sondern echt unschädlich zu machen. So existiert schon ein Verfahren, welches Ammoniaklösung aus dem Strippingverfahren in einer Kläranlage direkt in eine MVA führt und dort ein Rauchgas-DENOX-Verfahren speist (EP-A1 302352). Allerdings hat dieses bekannte Verfahren den Nachteil, daß die beiden Anlagen sich in unmittelbarer Nähe zueinander befinden müssen, da sich der Transport einer Ammoniaklösung als technisch und finanziell aufwendig erwiesen hat.

Es sind weiters nach einem neueren Prinzip arbeitende Verfahren bekannt geworden, mittels welchen unter Einsatz von natürlichen Ionenaustauschern Ammonium wirkungsvoll aus verschiedenen Wässern wie z.B. aus Kläranlagen entfernt werden kann; siehe dazu j.Hlavay, K.Polyak, j.Incedy, M.Zimonyi: "Occurence, Properties and Utilization of Natural Zeolites" und EP-A 114038. Dabei wird das mit Ammonium beladene Wasser über eine oder mehrere mit Zeolithen gefüllte Kolonnen geleitet. Nach einer gewissen Zeit ist der Zeolith mit Ammonium großteils beladen und damit erschöpft. Danach muß der Ionentauscher regeneriert werden, indem das Ammonium von ihm entfernt wird, damit er von neuem zur De-Ammonisierung von Abwasser eingesetzt werden kann. Bei herkömmlichen Regenerationsverfahren wird der erschöpfte Zeolith beispielsweise mit einer 1-3m Kochsalzlösung regeneriert.

Ein dem Abwasser-Ammoniak-Problem zumindest gleichrangiges Umwelt-Problem stellen die insbesondere aus Verbrennungsprozessen stammenden Stickstoffoxide in Rauchgasen dar. Zu deren Bekämpfung ist seit längerem das oben schon erwähnte DENOX-Verfahren bekannt. Dabei wird Ammoniak bzw. Ammonium in einem bestimmten Temperaturbereich in den Rauchgaskanal eingedüst. Das eingedüste Ammonium bewirkt die Umwandlung der unerwünschten und hochtoxischen Stickoxide der Rauchgase in unproblematischen Stickstoff, was den Eintrag dieser Gase in die Umwelt und damit die Gefahr des sauren Reagens reduziert.

Die Aufgabe der Erfindung besteht nun darin, ein technisch weniger aufwendiges, leicht manipulierbares und bezüglich der Endprodukte und deren Deponierung vorteilhaftes Verfahren zu schaffen, bei welchem sich im wesentlichen die Überführung von bei der Aufarbeitung von Abwässern gewerblichtechnischer und/oder kommunaler Herkunft in großen Mengen anfallendem Ammonium und/oder Ammoniak und weiters die Überführung von bei Oxidations- und/oder Verbrennungsprozessen entstehenden Stickstoffoxiden jeweils zu umweltfreundlichem Stickstoff auch bei größerer Entfernung zwischen Abwasser-Quelle und Stickstoffoxid-Quelle miteinander synergistisch koppeln lassen.

Gegenstand der Erfindung ist ein neues, auf die jeweiligen Gegebenheiten abstimmbares, variables Verfahren zur Verringerung, Umwandlung und/oder Beseitigung von bei Verbrennungs- und/oder industriellen und/oder Umweltentlastungs-Prozessen anfallenden Schadstoffen, insbesondere aus der Gruppe Stickstoffoxide, Ammoniak und Ammonium, wobei in Abgasen von Verbrennungsprozessen enthaltene Stickstoffoxide mit im wesentlichen Wässern und/oder Abwässern entzogenem Ammoniak bei erhöhter Temperatur zu Nicht-Schadstoffen umgesetzt werden, für die Durchführung des Verfahrens vorgesehene vorteilhaft ausgestaltete Anlagen, sowie deren Anwendungen.

Das neue Grund-Verfahren besteht im wesentlichen darin, daß mindestens ein
– in einer ersten Verfahrensstufe durch intensives In-Kontakt-Bringen mit Ammoniak und/oder Ammonium-Ionen generierendem und/oder solche enthaltendem, zu de-ammonisierenden Wasser und/oder Abwasser schließlich mit Ammonium-Ionen zumindest zum Teil beladenes, feinteiliges, Ionenaustausch-fähiges, anorganisches Struktur-Material (anorganischer Ionentauscher), insbesondere natürlicher Zeolith,
– in einer zweiten Verfahrensstufe als Ausgangsmaterial für mit einem zu de-(NO$_x$)ierenden Abgas und/oder Rauchgas eines Oxidations- bzw. Verbrennungsprozesses in Kontakt und mit darin enthaltenen Stickstoffoxiden zur Umsetzung zu bringendes Ammonium und/oder Ammoniak eingesetzt wird.

Wesentlich für das neue, insbesondere für eine systemübergreifende Entsorgung umweltgefährdender Stickstoffverbindungen besonders günstige Verfahren, ist der Einsatz der infolge ihres festen Aggregatzustandes und ihrer hohen Chemikalien-Bindefähigkeit unproblematischen und einfach manipulierbaren Ionentausch-fähigen Gerüstmineralien als Ammonium bzw. Ammoniak aus (Ab)Wässern ent- und die De-(NO$_x$)ierung von Verbrennungs-Gasen mit diesem (Ab)Wasser-Ammoniak versorgendes Universalmedium, das selbst noch dann umweltrelevante Vorteile aufweist, wenn es in einem Einwegverfahren Einsatz findet.

Als Ionentausch-fähige Gerüstmaterialien kommen synthetische und insbesondere natürliche Zeolithe in Frage. Als solche seien die sogenannten "Molekularsiebe", Faser-Zeolithe wie Sodalith, Natrolith und Mordenit, Blatt-Zeolithe, wie Heulandit, Klinoptilolith und Stilbit, und Würfel-Zeolithe, wie Faujasit, aber auch weiters Bentonit und dgl. quellfähige Minerale beispielhaft genannt.

Es soll an dieser Stelle gleich erwähnt werden, daß sich die Deammonisierung von Wässern, Abwässern und deren Konzentraten, z.B. nach Abtrennung vom Klärschlamm, mit Hilfe der anorganischen Ionentauscher besonders auch für den Bereich des Ammoniumgehaltes unterhalb von etwa 100 mg/l Abwasser, also z.B. nach einem Grob-Stripping des Ammoniaks, eignet.

Beim Vorgehen nach der vorteilhaften Ausführungsform des Verfahrens gemäß **Anspruch 2** ist bei voller Wahrung der insbesondere bei größerer Distanz zwischen zu entsorgender Ammonium- und Stickstoffoxid-"Quelle" transportfreundlichen Feststoff-Form des Ammonium-Speichers, der Vorteil der Regenerierung und Recyclisierung des Ionentauschers in die Wasseraufbereitung und einer Weiterverwendung einer mit Ammoniak arbeitenden De-(NO$_x$)ier-Anlage ohne adaptive Umbauten, z.B. infolge zusätzlicher Feststoff-Einbringung und Entstaubung der Verbrennungsgase ermöglicht.

Eine wesentliche, ebenfalls nicht stark ins Gewicht fallende Änderungen bestehender Anlagen bedingende Verbesserung der ebenerwähnten Verfahrensweise läßt sich bei einer hinsichtlich des Regenerieraufwandes vorteilhaften Ausführungsform gemäß **Anspruch 3** erzielen. Dabei kann selbst bei größerer Entfernung zwischen Abwasser- und Verbrennungsanlage, ein Transport von Ammoniak als Lösung od.dgl. entfallen, wenn der damit beladene, als Feststoff vorliegende Ionentauscher zur Verbrennungsanlage verbracht und dort mit besonders billigem Wasserdampf de-ammonisiert wird. Das Regenerat kann dann wieder zur Abwasseranlage zurückgebracht und dort problemlos zur De-ammonisierung eingesetzt werden.

In diesem Zusammenhang hat es sich als günstig erwiesen, die Ionentauscherbetten in Form von leicht in die entsprechenden Kolonnen einsetzbaren und nach Beladung entnehmbaren und verfrachtbaren Einheiten, etwa Patronen, auszubilden, wodurch ein Manipulieren mit dem feinteiligen Ionentauschmaterial selbst unterbleiben kann

Eine besonders vorteilhafte Form kann eine Verfahrensweise darstellen, wie sie durch **Anspruch 4** charakterisiert ist.

Bei dieser Verfahrensart, bei der der Ammoniak beispielsweise mit Dampf gestrippt werden kann, ist der wesentliche Vorteil gegeben, daß die bei der Beseitigung von Schadstoffen aus Verbrennungsgasen anfallenden, dann ebenfalls umweltrelevanten festen Rückstände und Waschwässer selbst wieder zur Rückgewinnung des infolge des "Ammoniumschlupfes" bei der nichtkatalytischen De-(NO$_x$)ierung im Rauchgas enthaltenen und daraus ausgewaschenen Ammoniaks aus dem damit beladenen Ionentauscher eingesetzt werden kann. Da die Filterasche in der Regel stark alkalisch ist, kann meist auf einen Zusatz einer Base, wie Calciumoxid, zur Ammoniakfreisetzung verzichtet werden. Der Zusatz des Ionentauschers zur Filterasche - wobei diese, siehe später, gemäß einer anderen Verfahrensform selbst von einer De-(NO$_x$)ierung Ionentauscher und/oder thermisch aufgeschlossenes Ionentauschermaterial enthalten kann - hat den Vorzug, daß durch diesen eine besonders hohe, jede Elution bei späterer Deponie ausschließende Einbindungsfähigkeit für Schwermetallionen-Spuren erfolgt.

Durch Einmischen anorganischer Bindemittel können neben einer weiteren Erhöhung der Einbindung und Immobilisierung von Schadstoffen eine Kompaktierung und höhere Transport- und Deponiefreundlichkeit erreicht werden.

Eine Einstellung des obenerwähnten "Ammoniumschlupfes" auf höhere Werte bringt den Vorteil der Zurückdrängung der Dioxinbildung im Rauchgas, wobei die höheren Ammoniumgehalte im Waschwasser infolge des Gebrauchs von Zeolithen kein Problem darstellen. Weiterer Vorteil der Einbringung des Ammonium-Zeoliths in die Filterasche ist, daß das in derselben enthaltene Quecksilber nicht mehr beim Ammonium-Strippen mit Dampf in die Gasphase gebracht wird, sondern durch den Ionentauscher fest eingebunden bleibt.

Die Vorgehensweise gemäß **Anspruch 5** bringt den Vorteil einer besonders wirksamen Immobilisierung.

Beim Vorgehen gemäß der im **Anspruch 6** näher beschriebenen günstigen Verfahrensform ist der Vorteil eines Wegfalls der doch zeit- und chemikalienaufwendigen Regeneration sowie des ebenfalls energieverbrauchenden Ammoniak-Abstrippens gegeben. Darüber hinaus kann bei Erhitzen des Ionentauschers in einem vom Rauchgas-Strom umspülten, im die genannten Temperaturen aufweisenden Rauchgaskanal-Abschnitt angeordneten Wärmetauscher eine Rauchgasabkühlung mit einer Vorerhitzung des aus dem Ionentauscher freigesetzten Ammoniaks vor dessen Zufuhr in den Rauchgaskanal-Abschnitt mit der für die nichtkatalytische De-(NO$_x$)ierung nötigen höheren Temperatur günstig kombiniert werden. Besonderer Vorteil neben dem wesentlich verringerten Regenerier-Aufwand ist diese Niedrig-Temperaturbehandlung des Ionentauschers auch deshalb, weil dadurch dessen Struktur und damit die aktiven Austauschzentren geschont werden, was eine hohe Zahl an Regenerations-Zyklen gewährleistet.

Eine besonders wirksame Entstickung von Verbrennungs-Gasen und eine Reihe weiterer für eine Umweltschonung wesentlicher Vorteile lassen sich bei Durchführung der besonders bevorzugten Ausführungsform

4

des erfindungsgemäßen Verfahrens gemäß **Anspruch 7** erreichen. Bei dieser Verfahrens-Variante treten, insbesondere bei deren Durchführung im höheren Temperaturbereich, irreversible Neubildungen in der Gerüststruktur der anorganischen Ionentauscher auf, womit deren Regeneration entfällt. Es wurde jedoch gefunden, daß auch der solchermaßen erhitzte Ionentauscher bei wesentlicher Strukturänderung zu reaktiven Oxiden die Fähigkeit beibehält oder sogar verstärkt, aus der Gasphase besonders umweltschädliche Schwermetalle bzw. deren Ionen und andere Schadstoffe aus den Rauchgasen aufzunehmen und praktisch irreversibel in seine Gitterstruktur einzubauen, was eine spätere Deponie der schließlich diese beladenen Zeolithe enthaltenden Flugstäube und Flugaschen wesentlich vereinfacht. Diese hohe Bindefähigkeit bei den im Rauchgas herrschenden Temperaturen bringt den weiteren Vorteil, daß Schwermetalle, wie insbesondere Kupfer, ihre bekannte katalytische Wirkung bei der Bildung von Dioxinen nicht entfalten können, sodaß hiemit, wie sich zeigte, ein wesentlicher Beitrag zur Lösung des Dioxin-Problems, insbesondere in Rauchgasen von Müllverbrennungsanlagen, geleistet wird.

Insbesondere aus abfallökonomischen Gründen ist es günstig, die Beladung des Ionentauschers mit Ammoniak in der aus **Anspruch 8** hervorgehenden Weise aus den dort genannten Abwässern verschiedener Provenienz vorzunehmen. Was die genannten Waschwässer von Rauchgas-Naßreinigungs-Prozessen betrifft, sei hier besonders darauf verwiesen, daß der beladene Ionentauscher im Rahmen eines Recyclings durchaus auch aus der Beseitigung des Ammoniak-Schlupfes einer wie erfindungsgemäß mit Ammoniak aus und/oder in einem anorganischen Ionentauscher betriebenen "reduktiven" De-(NO$_x$)ierung von Rauchgasen aus Verbrennungsprozessen, und - besonders bei einer schon oben angesprochenen Kopplung von Abwasser- und Müllentsorgung - bei der Entstickung von Abgasen aus Müll-Verbrennungsanlagen stammen kann. Hier ist eine Koppelung mit den Verfahrensvarianten gemäß den **Ansprüchen 4 bzw. 5** besonders vorteilhaft.

Als besonders wirkungsvoll haben sich sowohl bei der De-ammonisierung von Abwässern als auch beim nachfolgenden Einsatz zur reduktiven De-(NO$_x$)ierung die im **Anspruch 9** genannten bevorzugten Gerüstmineralien erwiesen, wobei der dort genannte Bentonit zwar nicht zu den anorganischen Ionentauschern gezählt wird, jedoch den Vorteil besitzt, noch kostengünstiger zu sein als die natürlichen Zeolithe.

Die Ammonium-Aufnahme ist, wie eigene Versuche gezeigt haben, interessanterweise dann hoch, wenn - wie gemäß **Anspruch 10** vorgesehen - mit Natrium-Ionen beladene Gerüstminerale zur Abwasser-De-ammonisierung eingesetzt werden; eine Aktivierung der Mineralien, im speziellen Zeolith mit Natriumsalz, erhöht die Kapazität und somit auch die Wirtschaftlichkeit wesentlich.

Bevorzugt wird ein anorganischer Ionentauscher mit einer Ammonium-Beladungs- bzw. Austausch-Kapazität von mindestens 10g Ammonium pro kg (etwa 0,5 Äquivalent(kg) Ionentauscher eingesetzt.

Wenn, die günstigerweise vorgesehen, in der ersten Verfahrensstufe bei den im **Anspruch 12** angegebenen Ammonium-Konzentrationen und Durchflußraten des Abwassers durch ein Ionentauscher-Bett gearbeitet wird, läßt sich bei annehmbarer Wirtschaftlichkeit eine beachtliche De-ammonisierung erzielen.

Bei indirektem Einsatz der Ammonium-Ionentauscher als Ammoniaklieferant in der De-(NO$_x$)hierung der Rauchgase ist es günstig, für dieselben Partikelgrößen von 0,2 bis 4 mm, insbesondere von 0,5 bis 1 mm, vorzusehen, was für die Durchflußrate des Abwassers in der De-ammonisier-Stufe und die Reduktion der Verluste durch Staubausbildung infolge Abriebs innerhalb der De-(NO$_x$)ierung günstig ist.

Für die obenbeschriebene, neuartige Direkteinbringung des Ammonium-Ionentauschers in die etwa 500 bis 1050°C heißen Abgase ist es zur Sicherung eines intensiven Reaktionskontaktes bei geringer Verweilzeit in der Hochtemperaturzone, insbesondere für die hier günstige nicht-katalytische De-(NO$_x$)ierung vorteilhaft, einen Ionentauscher mit einer mittleren Partikelgröße von etwa 10 bis etwa 1000 μm einzusetzen.

Wie schon oben erwähnt, ist es bei der auf indirekte Weise vorgenommenen Freisetzung des schließlich zur De-(NO$_x$)ierung der Verbrennungs-Abgase vorgesehenen NH$_3$ besonders sparsam, wenn - wie gemäß **Anspruch 15** vorgesehen - der anorganische Ionentauscher nach Abgabe des ihm innewohnenden Ammoniaks im Kreislauf geführt wird.

Wenn, wie gemäß einer weiteren bevorzugten Ausführungsform der Erfindung vorgesehen, der mit Ammonium beladene anorganische Ionentauscher in einen Strom der zu de-(NO$_x$)ierenden Abgase und/oder Rauchgase zusammen mit einem flüssigen und/oder gasförmigen Medium eingebracht wird, so ist neben einer weitgehenden Umsetzung von aus dem Ionentauscher pyrolytisch freigesetztem Ammoniak mit den Stickstoffoxiden der schon kurz erwähnte, besonders umweltrelevante Vorteil einer optimal inertisierenden Einbindung von Schwermetallverbindungen in das Mineralgerüst des durch die hohen Temperaturen aufgeschlossenen anorganischen Ionentauschers gesichert.

Der Ammonium-Ionentauscher kann naß, z.B. als "Slurry" mit Wasser "eingedüst" und/oder mit einem Trägergas, meist Luft, in den Abgasstrom eingeblasen werden. Die Einbringung als "Slurry" hat den Vorteil, daß infolge der Verdampfung des Wassers lokale Überhitzungen des Ionentauschers vermieden werden können.

Bei eingehenden Studien konnte festgestellt werden, daß durch die Schwermetalle im Rauchgas, in deren Strom - wie schon beschrieben - der Ionentauscher direkt eingebracht wird, die nicht-katalytische De-(NO$_x$)ie-

rung mit Ammoniak schon bei tieferliegenden Temperaturen beginnt und zufriedenstellend abläuft. Die Schwermetalle dürften in Gegenwart der heißen, das Ammoniak abgebenden Ionentauscher katalysatorartigen Einfluß auf die Ammoniak-Stickstoffoxid-Umsetzung nehmen.

Infolge der abgesenkten Umsetzungs-Temperatur wird die Gerüststruktur des Ionentauschers weniger beansprucht und es kann daher auch dessen Teil-Recyclisierung, z.B. in die Abwasser-Deammonisierungsstufe, erfolgen.

Dementsprechend ist eine Verfahrensart von besonderem Vorteil, welche gemäß **Anspruch 17** ausgebildet ist. Durch das in sich intensiv bewegte , aber in Relation zum Rauchgasstrom als Zone stillstehende, quasifluide Bett ist ein besonders intensiver Kontakt zwischen Ammonium-Ionentauscher und Stickoxiden sichergestellt. Hiebei können vorteilhaft die höheren Partikelgrößenwie oben angegeben - eingesetzt werden und der feine vom Rauchgasstrom fortgeschleppte Abrieb besorgt die oben schon erläuterte für die Deponie wichtige Einbindung der Schwermetalle.

Das Wirbelbett hat auch den Vorteil, daß das Verhältnis von Ionentauscher zu den restlichen, letztlich mitabgetrennten Feststoffanteilen genau auf einen jeweils gewünschten oder nötigen Grad der Immobilisierung der Schadstoffe abgestellten Wert für eine umweltgerechte End-Deponierung einstellbar ist.

Der oben schon erörterten Frage eines Einsatzes des thermisch beanspruchten Ionentauschers, der beim Direktkontakt zwischen Ammonium-Ionentauscher und $(NO_x)$ -hältigem Rauchgas gebildet wird, kann die vorteilhafte Vorgehensweise gemäß **Anspruch 18** gerecht werden.

Bei der insbesondere im Sinne der Umweltschonung nach End-Deponierung der Abfälle aus dem neuen Verfahren vorteilhaften Ausbildung der zweiten Verfahrensstufe gemäß **Anspruch 19** wird der infolge der Katalyse-Wirkung der Schwermetalle des Rauchgases und infolge der dadurch abgesenkten Reaktionstemperatur bei der Entstickung geringere Zerstörungsgrad des erhitzten Ionentausch-Gerüstmaterials in Kombination mit seiner infolgedessen noch gesteigerten Einbindungs-, Immobilisierungs- und Inertisierungskapazität auch für andere hochtoxische Stoffe, z.B. aus der Dioxin-Klasse, genutzt.

An dieser Stelle sollen die Vorteile des neuen Kombinationsverfahrens zusammengefaßt werden:

1. Das Problem der Ammoniumentfernung aus Wässern und/oder Abwässern, wie insbesondere aus Kläranlagen, kann zu einem beträchtlichen Ausmaß gelöst werden.

2. Die Entsorgung des Ammoniums ist solcherart gewährleistet. Da Kläranlagen und Müllverbrennungsanlagen (MVA) meist durch eine öffentliche Institution betrieben werden und in größeren Gemeinden meist zumindest je eine solche Anlage steht, kann ein "innerkomunales" - sonst aber auch ein "interkommunales" - Recycling durchgeführt werden.

3. Infolge des Verbrauches des Zeolithes in der MVA ist laufend ein Teil des Zeolithes zu ersetzen, womit Alterungs- und Qualitätsabnahme-Erscheinungen des auf herkömmliche Weise oftmals regenerierten Ionentauschers umgangen werden können.

4. Der Transport des Ammoniums von einer "De-ammonisier-, also z.B. Kläranlage zu der MVA stellt auch bei größerer Distanz der Standorte voneinander kein Problem dar, da Zeolithe ein niedriges spezifisches Gewicht aufweisen und auch keine korrosiven Eigenschaften und Geruchsemissionen zeigen.

5. Das für das DENOX-Verfahren benötigte Ammonium muß nicht zugekauft werden, was sich in der Betriebskostenrechnung für eine MVA positiv niederschlägt, anderseits werden in der De-Ammonisier-Anlage, also z.B. kommunale Kläranlage, Kosten der Regenerierung eingespart.

6. Die Menge des in die Rauchgase der MVA eingedüsten Ammoniums kann durch einfache Bestimmung des Ammoniumgehaltes der Zeolithe genau berechnet und dosiert werden.

7. Durch die mit heißem Rauchgas de-ammonisierten Zeolithe wird - wie oben schon beschrieben - der Schwermetallgehalt der letztlich an die Umwelt abgegebenen Rauchgase vermindert, was einen positiven Effekt bezüglich einer herabgeminderten katalytischen Bildung von chlorierten Dioxinen und Furanen an Metalloxidoberflächen auf Flugascheteilchen hat, wodurch die Menge auch dieser äußerst gefährlichen Stoffe vermindert wird.

8. Die sich im Rauchgas befindlichen, umweltschädlichen Schwermetalle werden im Zeolith eingebunden und in dieser Form in einer Trenneinrichtung, besonders am Elektrofilter, wesentlich leichter abgeschieden. Dies gilt zumindest für Rauchgastemperaturen bis zu etwa 400°C. Bei Temperaturen darüber erfolgt eine echte Umsetzung mit den sich bildenden reaktiven Oxiden, was ebenfalls eine hohe Immobilisierung garantiert.

9. Für eine Fixierung, Immobilisierung und Inertisierung der (Elektro)Filteraschen muß Zeolith dort nicht mehr gesondert zugegeben werden, da er sich bereits in der Asche befindet. Gleichzeitig findet damit auch eine optimale Durchmischung der Asche mit den Zeolithen statt, was den Grad der Bindung der hochtoxischen Bestandteile der Rauchgase wesentlich fördert.

10. Der Zeolith für die Eindüsung muß nicht mehr separat gekauft werden, sondern kann gemeinsam mit der Kläranlage beschafft werden. Dies wirkt sich für beide Betriebe kostengünstig aus.

11. Infolge der Koppelung von De-ammonisierung, De-($NO_x$)ierung und Immobilisierung umweltschädigender Stoffe können auch der technische, personelle und administrative Aufwand und damit die entsprechenden Kosten reduziert werden.

12. Wenn in einer Kläranlage mehr Zeolith gebraucht wird als in einer MVA eingesetzt werden muß, kann der überschüssige Anteil des Zeoliths, sofern nicht Abnahmeverträge mit mehreren MVA's geschlossen werden können, auf herkömmliche Art dortselbst regeneriert werden und das Ammonium in Form eines Salzes als Düngemittelrohstoff verkauft werden. Die Regeneration des derart überschüssigen Zeolith-Anteils stellt kein Problem dar und ist mit einem relativ kleinen Aufwand zu bewerkstelligen.

13. Eine Distanz zwischen den beiden Betrieben stellt - da kein korrosives Ammoniak oder Ammonium zu transportieren ist - nur mehr ein untergeordnetes Problem dar.

Es soll nicht unerwähnt bleiben, daß bei einem höheren Ungleichgewicht zwischen hoher Ammoniak/Ammonium-Gewinnung aus Abwasser und relativ geringerem Anfall von Stickoxiden in der (Müll)Verbrennungsanlage der "überschüssige" Ammoniak der(Abwasseraufbereitungsanlage selbst, wesentlich vorteilhafter aber in Form des damit beladenen Ionentauschers - siehe schon weiter oben - in die Verbrennungszone der (Müll)Verbrennungsanlage selbst eingebracht werden kann, vomit zwar ein Anstieg der $NO_x$- Gehalte der Abgase erfolgt, zu deren "Neutralisierung" dann eben auch mehr Ammoniak bzw. damit beladener Ionentauscher aus der (Ab)Wasseranlage erforderlich ist. Der dabei entstehende Stickstoff weist keine Umweltrelevanz mehr auf. Es hat sich gezeigt, daß eine solche Einbringung von $NH_4$-Ionentauscher letztlich in der Asche selbst zu Oxiden mit hoher Immobilisierungswirkung auf dort enthaltene Schadstoffe, insbesondere Schwermetalle führt.

Weiterer Gegenstand der Erfindung sind - wie eingangs kurz erwähntAnlagen, die insbesondere zur Durchführung des erfindungsgemäßen Verfahrens in den verschiedenen Varianten besonders vorteilhaft geeignet sind.

So ist eine Anlage gemäß **Anspruch 20** besonders .für die oben beschriebene Direkteinbringung vorgesehen, wobei infolge des Mitgetragenwerdens der Ionentauscher-Partikel durch den Abgasstrom die nötige Kontaktzeit für die Desorption des Ammoniaks vom Ionentauscher, dessen Umsetzung mit den Stickstoffoxiden und zur Aufnahme der Rauchgas-Schadstoffe in den nun de-ammonisierten Ionentauscher und deren hohe Einbindung in denselben gewährleistet ist.

Weiters ist vom Standpunkt der Prozeßsteuerung und -kontrolle eine gemäß **Anspruch 21** ausgebildete Anlage besonders günstig, wobei der oben angesprochene innige Kontakt für die Umsetzung von Ammoniak mit $NO_x$ durch die hohe Konzentration an Feststoff im Wirbelbett und dessen hochgradige Durchwirbelung mit dem strömenden Rauchgas sichergestellt ist. Bei Einsatz hochtemperaturfester Gerüstminerale ist der weitere Vorteil der Ermöglichung einer echten Regeneration des Ionentauschers und dessen Recyclisierung in eine Wasser- und/oder Abwasser-De-ammonisierung gegeben, wobei vom Rauchgas mitgetragener Abrieb zur späteren Immobilisierung der Schadstoffe in den aus dem Abgas abgeschiedenen Feststoffanteilen beiträgt.

Bei dieser Ausführungsweise zur Regenerierung ist es von Vorteil, die eben beschriebene Anlage in der im **Anspruch 22** angegebenen Art zu ergänzen.

Ist eine Rückführung des im Wirbelbett de-ammonisierten Ionentauschers in die Abwasser-Stufe nicht vorgesehen, ist durch das Fließbett eine exakte Steuerung einerseits der Entstickung und anderseits der Zugabe des Ionentauschers eventuell an sogar an mehreren gewünschten Stellen im Rauchgasstrom zur temperaturabhängig gezielten Absorption von Schwermetallen und verschiedenen, besonders hochtoxischen Stoffe, wie z.B. niedermolekulare Dioxine oder auch Furane, zu deren Einbindung und letztlich auch bei einer gesonderten Zugabe zu den Flugascheanteilen zur wirkungsvoll steuerbaren Immobilisierung der Stoffe zur Deponierung erreichbar.

Eine erfindungsgemäße Anlage, bei welcher z.B. aus Gründen der Erhaltung einer Recyclisierbarkeit des Ionentauschers und damit einer Reduktion der Menge der letztlich zu deponierenden Flugasche(n) und -stäube eine gesonderte oder indirekte Erhitzung des Ionentauschers zur Desorption des für die Rauchgas-Entstickung vorgesehenen Ammoniaks erfolgt, ist vorteilhaft wie im **Anspruch 23** angegeben ausgebildet. Durch die Anordnung des Erhitzers für den Ionentauscher im Rauchgaskanal selbst innerhalb der genannten Temperaturzone desselben läßt sich eine schonende Regeneration bei gleichzeitiger Energieeinsparung und gleichzeitig ein Beitrag zur Abkühlung der Rauchgase erreichen

Die vorher schon mehrmals angesprochene Inertisierung und/oder Immobilisierung umweltrelevanter Schadstoffe ohne Gefahr einer späteren Desorption, läßt sich günstigerweise mit einer Ausbildung der Anlage gemäß **Anspruch 24** erreichen.

Die Immobilisierungs-Einrichtung umfaßt günstigerweise zumindest eine Misch- und Homogenisier-Einrichtung zur Sicherstellung einer von gefährlichen, weil die Einbindungskapazität übersteigenden, Schadstoff-Anhäufungen freien End-Deponierungs-Form, beispielsweise als definierte Formkörper.

Schließlich betrifft die Erfindung die neuartige Verwendung der oben eingehend beschriebenen Ausführungsformen von Verfahren und Anlage gemäß der Erfindung nach **Anspruch 25**, sowie letztlich der Ionentauschfähigen Gerüstmineralien gemäß **Anspruch 26.**

Anhand der Zeichnung wird die Erfindung näher erläutert.

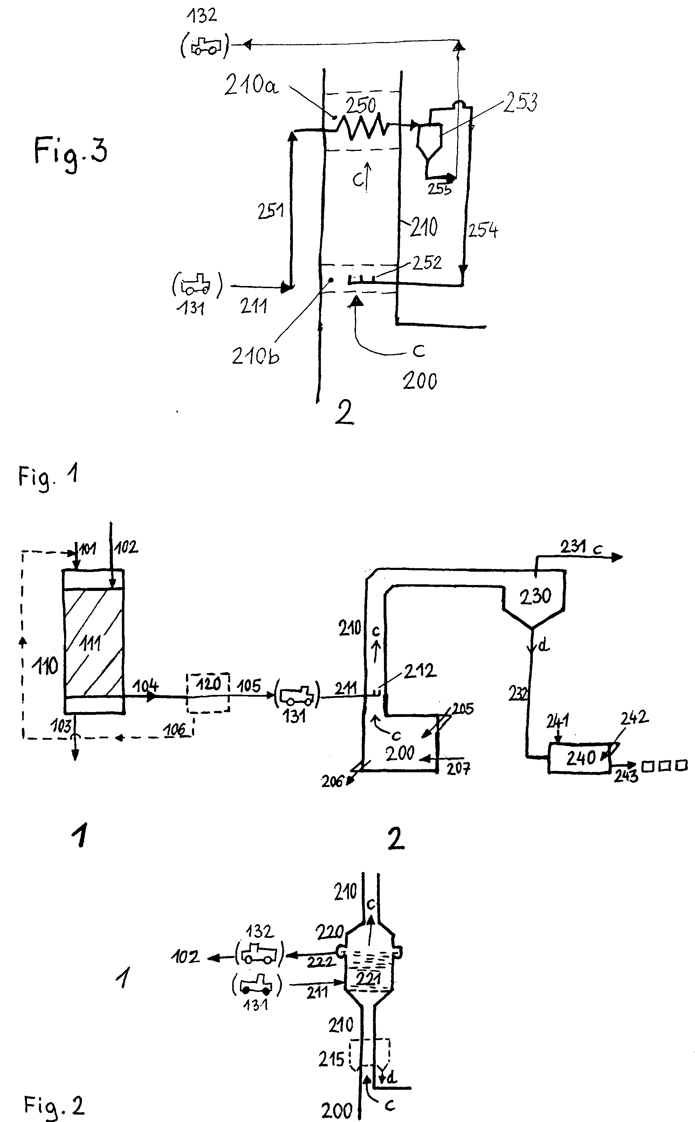

Es zeigen die Fig.1 ein Schema des neuen kombinierten Verfahrens und der Anlage in der bevorzugten Ausführungsform mit direktem Ionentauscher-RauchgasKontakt, Fig.2 einen Ausschnitt einer weiteren Ausbildung der durch Fig.1 erläuterten Ausführungsform und Fig.3 das Schema einer vorteilhaften Ausführungsform, welche eine indirekte Heiß-Desorption des Ammoniaks vom beladenen Ionentauscher zur nachfolgenden Umsetzung mit den Abgas-Stickoxiden umfaßt.

Bei der zur Durchführung einer bevorzugten Ausführungsform des neuen Verfahrens vorgesehenen erfindungsgemäßen Anlage gemäß Fig.1 wird in Anlagenstufe 1 durch eine Zuleitung 101 und dann durch ein Bett 111 eines anorganischen Ionenaustauschers in einer entsprechenden Kolonne 110 Ammoniumionen enthaltendes, zu de-ammonisierendes Wasser bzw. Abwasser-, wie z.B. Preßwasser von der Schlammabtrennung einer kommunalen Kläranlage, abgeleitet und mit,ingewünschtem Maß stark vermindertem Ammoniumgehalt über Leitung 103, z.B. zu einem Vorfluter hin, abgeführt. Das Bett 111 ist hier schematisch als über eine Züführung 102 zu- und eine-Abführung 104 abführbar durch die Kolonne 110 bewegbar gezeigt. Üblicherweise wird-eine Mehrzahl parallel angeordneter und jeweils für die Entleerung einer Kolonne und deren Wiederbefüllung nach Eischöpfung umschaltbarer Ionentauscher-Betten, beispielsweise in Form von leicht manipulierbaren, in,die-Kolonnen einsetzbaren und ihnen entnehmbaren,austauschbaren "Patronen" vorgesehen sein. Der über 104 abgefährte, dann mit Ammonium beladene Ionentauscher kann in einer (strichliert angedeuteten) Entwässerungsstufe 120, z.B. Filterpresse und eventuell Trockner, in wieder rieselfähige Form übergeführt und - vom über eine (ebenfalls strichliert gezeigte) in die obengenannte Abwasserzuleitung 101 mündende Rückführung 106 abführbaren, in der Entwässerung 120 abgetrennten Wasser befreit - über eine Transportleitung 105 abgeführt werden. Wenn eine Einbringung des mit Ammonium beladenen Ionentauschers in die zweite Anlagenstufe in Form einer Suspension bzw. eines "Slurry" vorgesehen ist, kann die Trenn- und Trocknungseinrichtung 120 entfallen.

Für den - an sich häufigen - Fall einer nicht unmittelbaren Nachbarschaft einer Kläranlage zu einer Verbrennungs- bzw. Brennanlage ist ein - hier innerhalb einer Klammer als Lastauto schematisch angedeutetes - Transportsystem 131 für die Verbindung des Ionentauschers zur zweiten Anlagenstufe 2, also zur Abgasentstickung einer Verbrennungs-, bevorzugt Müllverbrennungsanlage 200 vorgesehen. Diese mit einer Beschickungs- 205 und einer Ascheaustragseinrichtung 206 sowie einer Zusatzbrennstoff-, z.B. Gas- oder Ölzufuhr 207 ausgestattete Verbrennungsanlage 200 weist mindestens eine von den entstehenden Verbrennungsgasen (C) durchströmte Ab- und Rauchgasabführung 210 auf, in welche in einer für nicht-katalytische $NO_x$-Reduktion geeigneten Temperaturzone über eine Zuführung 211 und Eintragsdüsen 212 der von der Wasser-De-ammonisierungs-Stufe 1 hertransportierte, anorganische Ionentauscher eingefördert, beispielsweise eingedüst oder eingeblasen wird. In dieser Zone der Rauchgasführung 210 herrschen Abgastemperaturen im Bereich von etwa 700 bis 1000°C und es erfolgt dort und während des Weiterströmens die Entammonisierung des Ionentauschers. Mit dem dabei freigesetzten Ammoniak läuft die im wesentlichen nicht-katalytische Reaktion mit den Stickstoffoxiden der Rauchgase c zu deren De-($NO_x$)ierung ab. Die nun außer mit Flugasche und/oder -stäuben mit feinteiligem de-ammonisiertem Ionentauscher beladenen Gase gelangen aus der Rauchgasführung 210 in die Abscheideeinrichtung 230, etwa Zyklone, Sack- und Elektrofilter, wo eine Trennung in im wesentlichen entstaubtes, über eine Abführung 231 abgeführtesgegebenenfalls einer weiteren Reinigung, z.B. Naßwäsche z.B. zur Entfernung des als Folge des "Ammoniumschlupfes" bei der Entstickung im Abgas noch enthaltenen Rest-Ammoniaks - zuführbares, gasförmiges Medium und die von diesem bis hierher mitgetragenen Feststoffanteile d mit Flugaschen, -stäuben und Ionentauscher vorgenommen wird.

Die Feststoffanteile d werden über eine Abführung 232 in eine - in der hier gezeigten Variante mit Zuführungen für ein Bindemittel 242, wie z.B. Zement, und für Anmachwasser 241 ausgerüstete - Misch- und Homogenisierungs-Einrichtung 240 eingebracht, wo als Folge der Anwesenheit des vorher im Rauchgas c erhitzten Ionentauschers eine extrem hohe Einbindung von Schwermetallen und sonstigen Abgas-Schadstoffen und somit deren praktisch gänzliche Immobilisierung und/oder Inertisierung in den Feststoffrückständen erfolgt, welche schließlich - hier als Folge einer Kompaktierung als Formkörper gezeigt - über eine Fördereinrichtung 243 abgeführt werden und gefahrlos deponiefähig sind.

Im wesentlichen gleichen zweistufigen Bau gemäß Fig.1 hat die in Fig.2 nur in ihrem wesentlichen, die Stufe 2 betreffenden abweichenden Detail gezeigte erfindungsgemäße Anlage. In ihr wird zur Sicherung eines intensiven Kontaktes zwischen aus einer Brennkammer 200 kommendem, ($NO_x$)-hältigem Rauchgas c und mit Ammonium beladenem Ionentauscher innerhalb einer Erweiterung 220 der Rauchgasabführung 210 ein die Temperatur für eine im wesentlichen nichtkatalytische Entstickung aufweisendes Ionentauscher-Wirbel-Bett 221 aufrechterhalten. Dessen kontinuierliche Versorgung mittels schon zu Fig.1 erörtertem Transportsystem 131 zugeführtem Ammonium-Ionentauscher erfolgt über eine Zuführung 211 und dessen Entsorgung vom gleichmäßig und schonender de-ammonisierten Ionentauscher über eine Abführung 222, wobei der "thermisch regenerierte" Ionentauscher, der für eine Einbindung von Schadstoffen dann günstige,hochaktive Oxide enthält, z.B. in einen Vakuummischer zur Mischung mit den Filteraschen der (Müll)Verbrennungsanlage, Heizwerk od.dgl. zu deren Überführung in einen umweltfreundlich enddeponiefähigen Rückstand verbracht wird.

Bei der ebenfalls nur anhand des wesentlichen Details in der zweiten Anlagestufe 2 gezeigten, weiteren vorteilhaften Verfahrensvariante gemäß Fig.3 ist eine nichtkonventionelle, indirekte thermische De-ammonisierung des mit Ammonium beladenen Ionentauschers vorgesehen.

In der von den in einem Brennraum 200 gebildeten Rauchgasen c durchströmten Rauchgasführung 210 ist in deren eine Temperatur zwischen etwa 200 und 500°C aufweisender durch strichlierte Begrenzungslinien definierten Zone 210a ein Wärmetauscher 250 angeordnet, durch welchen - vom Transportsystem 132 von der Wasser-De-ammonisierung der ersten (nicht gezeigten) Stufe 1 her und über eine Zuführung 211,251 versorgt - Ammonium Ionentauscher geführt wird, und dort "heiß-de-ammonisiert" wird. Aus einer an den Erhitzer 250 angeschlossenen Trenneinrichtung 253 wird aus dem Ionentauscher freigesetztes Ammoniakgas über eine Leitung 254 in die Temperaturen zwischen etwa 500 und 950°C aufweisende Zone 210b der Rauchgasabführung 210 zum Kontakt mit den heißen Rauchgasen c zur Umsetzung mit deren Stickstoffoxiden über Verteildüsen 252 eingebracht. Der in der Trenneinrichtung 253, z.B. Zyklon, abgetrennte, auf besonders schonende Weise niedertemperaturregenerierte Ionentauscher wird nach seiner Abführung durch eine Förderleitung 255 dem Retour-Transport 132 zur Rückführung in die Abwasser-De-ammonisierung der Anlagenstufe 1 überantwortet.

Ergänzend sei erwähnt, daß innerhalb der beschriebenen Anlagen durchaus Einrichtungen zu einer zusätzlichen, anderwärtigen Verarbeitung des Ammoniums aus der Wasser-De-ammonisierungs-Stufe, wenn dessen Mengen z.B. die in der Verbrennungsanlage benötigte Entstickungskapazität übersteigen, also z.B. zur Düngemittel-Bereitung vorgesehen sein können, in der schematischen Zeichnung jedoch nicht gezeigt sind.

Im folgenden Beispiel werden die Erfindung und ihre Vorteile anhand einer bevorzugten Verfahrensvariante weiter erläutert:

Beispiel:

In einer Pilotanlage werden in einer ersten Stufe innerhalb von etwa 3,5 h 2,1 m³ eines Abwassers mit einem Ammoniumgehalt von 142 mg/l über zwei hintereinandergeschaltete, mit insgesamt 50 l eines natürlichen, mit Natriumionen beladenen Zeolithen (Provenienz: Ungarn mit einem Clinoptilolithgehalt von 55 Massen-%, Partikelgröße 0,3 bis 2,5 mm) beschickte Säulen von je etwa 2,5 m Länge mit einer Durchflußrate von etwa 12 Bett-Volumina (BV)pro Stunde geleitet. Das das Bett verlassende Wasser wies eine Ammoniumkonzentration von 6,9 mg/l auf. Der Ionentauscher wurde in der Säule mit Reinwasser gewaschen, nach Entnahme aus den beiden Säulen bei etwa 70°C getrocknet und zu einer Sondermüll-Verbrennungsanlage mit Drehrohrofen verbracht.

Das Drehofenabgas dieser Anlage wies nach Passieren des Zyklonvorwärmers einen mittleren $NO_x$-Gehalt, angegeben als $NO_2$, von etwa 1,8 g/m³ auf. Der zweiten Stufe des erfindungsgemäßen Verfahrens entsprechend, wurde in einer abgasstromabwärts eines Zyklonvorwärmers abzweigende Abgas-Bypaßleitung mit elektrischer Zusatzheizung und Temperaturkontrolle eine Zone der Abgastemperatur von etwa 910 bis 940°C eingestellt, die Abgasdurchflußrate betrug etwa 50 m³/h. In die genannte Zone wurden über eine Verteiler-Düse mit Luft als Träger gleichmäßig etwa 25 kg des Ammonium-Zeolithen aus Stufe 1 pro Stunde als Ammoniakquelle für die De-($NO_x$)ierung eingebracht. Im derart behandelten Abgas konnte schließlich ein Rest-$NO_x$-Anteil von nur 0,15 g/m³ und ein im wesentlichen vom "Ammoniumschlupf" herrührender Rest-Gehalt von 0,3 g/m³ ermittelt werden.

Untersuchungen am mit einem gesonderten Filter zurückgehaltenen Flugasche/-staub/Zeolith-Festanteil des Gases ergaben bei Laugung mit heißem Wasser Extrakte mit unter der Nachweisgrenze liegenden Werten der gängigen, von Müllverbrennungsanlagen emittierten Schwermetalle.

**Patentansprüche**

1. Verfahren zur Verringerung, Umwandlung und/oder Beseitigung von bei Verbrennungs- und/oder industriellen und/oder Umweltentlastungs-Prozessen anfallenden Schadstoffen, insbesondere aus der Gruppe Stickstoffoxide, Ammoniak und Ammonium, wobei in Abgasen von Verbrennungsprozessen enthaltene Stirkstoffoxide mit im wesentlichen Wässern und/oder Abwässern entzogenem Ammoniak bei erhöhter Temperatur zu Nicht-Schadstoffen umgesetzt werden, dadurch gekennzeichnet, daß mindestens ein

– in einer ersten Verfahrensstufe durch intensives In-Kontakt-Bringen mit Ammoniak und/oder Ammonium-Ionen generierendem und/oder solche enthaltendem, zu de-ammonisierenden Wasser und/oder Abwasser schließlich mit Ammonium-Ionen zumindest zum Teil beladenes, Ionenaustauschfähiges, anorganisches Struktur-Material (anorganischer Ionentauscher), insbesondere natürlicher Zeolith,

EP 0 504 131 A1

– in einer zweiten Verfahrensstufe als Lieferant von und/oder Ausgangsmaterial für mit einem zu de-(NO$_x$)ierenden Abgas und/oder Rauchgas eines Oxidations- bzw. Verbrennungsprozesses in Kontakt und mit darin enthaltenen Stickstoffoxiden zur Umsetzung zu bringendes Ammonium und/oder Ammoniak eingesetzt wird.

2. Verfahren nach Anspruch 1, dadurch gekennzeichnet, daß der anorganische Ionentauscher zur zumindest teilweisen Beladung mit Ammonium mit dasselbe generierendem und/oder enthaltendem Wasser und/oder Abwasser in Kontakt gebracht wird und das Ammonium durch Regeneration des Ionentauschers in eine flüssige Phase bzw. Lösung übergeführt und, gegebenenfalls als daraus nach Aufkonzentrierung mittels pH-Wert-Anhebung und Strippen freigesetztes Ammoniak, zur Umsetzung mit Stickstoffoxiden mit einem dieselben enthaltenden, zu de-(NO$_x$)ierenden Abgas- und/oder Rauchgas-Strom eines Oxidations- bzw. Verbrennungsprozesses in Kontakt gebracht wird.

3. Verfahren nach Anspruch 1 oder 2, dadurch gekennzeichnet, daß der anorganische Ionentauscher zur zumindest teilweisen Beladung mit Ammonium mit dasselbe generierendem und/oder enthaltendem Wasser und/oder Abwasser in Kontakt gebracht wird und danach im wesentlichen gleichzeitig mit seiner Regeneration mittels Base mit Heißdampf unter Freisetzung und Abführung von Ammoniak durchströmt wird und daß das erhaltene Ammoniak-Wasserdampf-Gemisch zur Umsetzung mit Stickstoffoxiden mit einem dieselben enthaltenden, zu de-(NO$_x$)ierenden Abgas- und/oder Rauchgas-Strom eines Oxidations- bzw. Verbrennungsprozesses in Kontakt gebracht wird.

4. Verfahren nach einem der Ansprüche 1 bis 3, dadurch gekennzeichnet, daß der anorganische Ionentauscher zur zumindest teilweisen Beladung mit Ammonium mit dasselbe generierendem und/oder enthaltendem Wasser bzw. Abwasser, insbesondere mit einem mit Ammonium beladenen Wasser aus einer Naßreinigung eines aus einer reduktiven De-(NO$_x$)ierung kommenden Ab- und/oder Rauchgases eines Verbrennungsprozesses in Kontakt gebracht wird und danach der mit Ammoniak beladene Ionentauscher mit bei einer Trocken-Reinigung des Ab- und/oder Rauchgases eines, bevorzugt des obengenannten, Verbrennungsprozesses abgeschiedener Filter- bzw. Elektrofilterasche, in Gegenwart von Wasser, gegebenenfalls unter Erhöhung des pH-Wertes durch Zugabe einer Base, innig vermischt und das bei diesem Vorgang freigesetzte Ammoniak zur Umsetzung mit Stickstoffoxiden mit einem dieselben enthaltenden, zu de-(NO$_x$)ierenden Abgasund/oder Rauchgas-Strom eines Oxidations- bzw. Verbrennungsprozesses in Kontakt gebracht wird.

5. Verfahren nach Anspruch 4, dadurch gekennzeichnet, daß der mit Ammonium beladene Ionentauscher in Gegenwart von Wasser mit Filterasche und/oder -staub zur Bildung eines inertisierten, deponiefähigen Abfallproduktes mit mindestens einem hydraulischen anorganischen Bindemittel innig gemischt, bevorzugt gebunden wird.

6. Verfahren nach einem der Ansprüche 1 bis 5, dadurch gekennzeichnet, daß der anorganische Ionentauscher zur zumindest teilweisen Beladung mit Ammonium mit dasselbe regenerierendem und/oder enthaltendem Wasser und/oder Abwasser in Kontakt gebracht wird, wonach der Ionentauscher zur Regeneration durch gesonderte und/oder durch indirekte Erhitzung mittels des heißen Abgases und/oder Rauchgases auf Temperatur im Bereich von 250 bis 550°C gebracht wird und das dabei aus dedem Ionentauscher freigesetzte Ammoniak zur Umsetzung mit Stickstoffoxiden mit einem dieselben enthaltenden, zu de-(NO$_x$)ierenden Abgas- und/oder Rauchgas-Strom eines Oxidations- bzw. Verbrennungsprozesses in Kontakt gebracht wird.

7. Verfahren nach einem der Ansprüche 1 bis 6, dadurch gekennzeichnet, daß der anorganische Ionentauscher zur zumindest teilweisen Beladung mit Ammonium mit dasselbe generierendem und/oder enthaltendem Wasser und/oder Abwasser in Kontakt gebracht wird, wonach der mit Ammonium-Ionen beladene anorganische Ionentauscher selbst bei Temperaturen zwischen 500 und 1050°C, bevorzugt zwischen 750 und 950°C, insbesondere zwischen 790 und 850°C, direkt mit einem Strom eines Stickstoffoxide enthaltenden, zu de-(NO$_x$)ierenden Abgases und/oder Rauchgases eines Oxidations- bzw. Verbrennungsprozesses in innigen Kontakt gebracht wird.

8. Verfahren nach einem der Ansprüche 1 bis 7, dadurch gekennzeichnet, daß der anorganische Ionentauscher durch innigen Kontakt mit zu de-ammonisierendem, kommunalem und/oder industriellem Abwasser und/oder bei Entwässerung von Klärschlämmen erhaltenem Abwasser-Konzentrat und/oder Waschwässern eines Rauchgas-Naß-Reinigungs-Prozesses mit Ammonium beladen wird.

9. Verfahren nach einem der Ansprüche 1 bis 8, dadurch gekennzeichnet, daß als ionentauschfähiges Strukturmineral ein natürlicher Zeolith aus der Gruppe Clinoptilolith und Mordenit und/oder Bentonit eingesetzt wird.

10. Verfahren nach einem der Ansprüche 1 bis 9, dadurch gekennzeichnet, daß als anorganischer Ionentauscher ein mit Natrium- und/oder Calcium-Ionen beladener natürlicher Zeolith eingesetzt wird.

11. Verfahren nach einem der Ansprüche 1 bis 10, dadurch gekennzeichnet, daß ein anorganischer Ionentauscher mit einer Ammonium-Beladungs- bzw. Austausch-Kapazität von mindestens 10 g Ammonium pro kg (etwa 0,5 Äquivalent/kg) Ionentauscher eingesetzt wird.

12. Verfahren nach einem der Ansprüche 1 bis 11, dadurch gekennzeichnet, daß bei Ammonium-Konzentrationen im zu de-ammonisierenden Wasser und/oder Abwasser im Bereich von etwa 10 bis etwa 1000 mg/l eine Wasser- und/oder Abwasser-Durchflußrate durch ein Bett des anorganischen Ionentauschers von etwa 5 bis etwa 15 Bett-Volumina pro Stunde eingestellt wird.

13. Verfahren nach einem der Ansprüche 1 bis 11, dadurch gekennzeichnet, daß ein anorganischer Ionentauscher mit einer mittleren Partikelgröße von 0,2 - 4 mm, insbesondere von 0,5 - 1 mm, eingesetzt wird.

14. Verfahren nach einem der Ansprüche 1 bis 11, dadurch gekennzeichnet, daß ein anorganischer Ionentauscher mit einer mittleren Partikelgröße von etwa 10 bis etwa 1000 μm eingesetzt wird.

15. Verfahren nach einem der Ansprüche 1 bis 14, dadurch gekennzeichnet, daß der anorganische Ionentauscher nach Beladung mit Ammonium und Regenierung zur De-Ammonisierung von mit Ammoniak und/oder Ammonium belastetem Wasser und/oder Abwasser recycliert wird.

16. Verfahren nach einem der Ansprüche 1 bis 15, dadurch gekennzeichnet, daß der mit Ammonium beladene anorganische Ionentauscher in einen Strom der zu de-($NO_x$)ierenden Abgase und/oder Rauchgase zusammen mit einem flüssigen und/oder gasförmigen Medium eingebracht wird.

17. Verfahren nach einem der Ansprüche 1 bis 16, dadurch gekennzeichnet, daß ein Strom des zu de-($NO_x$)ierenden Abgases und/oder Rauchgases mit in Form eines Fließ- und/oder Wirbel-Bettes in Bewegung gehaltenem, mit Ammonium beladenem anorganischem Ionentauscher in Kontakt gebracht wird.

18. Verfahren nach Anspruch 17, dadurch gekennzeichnet, daß mit Ammonium beladener Ionentauscher dem Fließ- und/oder Wirbel-Bett kontinuierlich zugeführt wird und nach Kontakt mit zu de-($NO_x$)ierendem Abgas und/oder Rauchgas den Filteraschen bzw. Rückständen der Rauchgas-Reinigung zugemischt wird.

19. Verfahren nach einem der Ansprüche 1 bis 18, dadurch gekennzeichnet, daß die Partikel des mit dem Abgas und/oder Rauchgas mitgetragenen anorganischen Ionentauschers bzw. Teiles des Ionentauschers zusammen mit den ebenfalls mitgeführten Flugstaub- und/oder Flugasche-Partikeln aus einem Verbrennungsprozeß abgeschieden, und bevorzugt schließlich mittels anorganischem Bindemittel verfestigt und kompaktiert werden.

20. Anlage zur Verringerung, Umwandlung und/oder Beseitigung von bei Verbrennungs- und/oder industriellen und/oder Umweltentlastungs-Prozessen anfallenden Schadstoffen, insbesondere aus der Gruppe Stickstoffoxide, Ammoniak und Ammonium, wobei in Abgasen von Verbrennungsprozessen enthaltene Stickstoffoxide mit im wesentlichen Wässern und/oder Abwässern entzogenem Ammoniak bei erhöhter Temperatur zu Nicht-Schadstoffen umgesetzt werden, insbesondere zur Durchführung eines Verfahrens gemäß einem der Ansprüche 1 bis 19, gekennzeichnet durch eine
- erste Stufe (1) mit mindestens einem jeweils Zuleitung(en) (101) für zu de-ammonisierendes Wasser und/oder Abwasser und Ableitung(en) (103) für de-ammonisiertes Wasser und/oder Abwasser aufweisenden Behälter (110) mit über Zuführung(en) (102) mit feinteiligem, anorganischem Ionentauscher versorgbarem und über Ableitung(en) (104) entsorgbarem vom Wasser bzw. Abwasser durchströmbarem Ionentauscher-Bett (111), gegebenenfalls einer an die Ableitung(en) (104) anschließenden Einrichtung (120) zur Abtrennung flüssiger Phase vom und/oder zur Trocknung des mit Ammonium beladenen Ionentauscher(s) und Einrichtungen zur Förderung (105,131,211) zur Einbringung (212) des mit Ammonium beladenen Ionentauschers in eine
- zweite Stufe (2) mit mindestens einem von zu de-($NO_x$)ierenden Abgasen und/oder Rauchgasen (c) durchströmten Abgas- und/oder Rauchgas-Abführkanal (210) einer Verbrennungs-Anlage (200), insbesondere Müll-Verbrennungsanlage, und vorzugsweise mit diesem verbundene(n) Einrichtung(en) (230) zur Abtrennung bzw. Abscheidung der Partikeln von Ionentauscher und/oder Flugstaub und/oder Flugasche (d) aus dem Abgas und/oder Rauchgas (c).

21. Anlage nach Anspruch 20, dadurch gekennzeichnet, daß in der zweiten Stufe (2) im Abgas- und/oder Rauchgas-Kanal (210) einer Verbrennungsanlage (200), insbesondere Müll-Verbrennungsanlage, ein vom zu de-(NO$_x$)ierenden Abgas und/oder Rauchgas (c) durchströmter, Zuführung(en) (211) für die Partikel eines mit Ammonium beladenen anorganischen Ionentauschers, ein Fluid-Bett (221) des Ionentauschers, und Abführung(en) (222) für de-ammonisierten Ionentauscher, aufweisender Fließ- bzw. Wirbelbett-Reaktor (220) angeordnet ist, wobei zur Recyclisierung des Ionentauschers die Abführungen (222) für den Ionentauscher, gegebenenfalls über gesonderte Fördereinrichtungen (132), mit der (den) Zuführung(en) (102) für frischen und/oder regenerierten Ionentauscher zum vom zu de-ammonisierenden Wasser und/oder Abwasser durchströmten Ionentauscher-Bett (111) der ersten Stufe (1) verbunden ist.

22. Anlage nach Anspruch 20 oder 21, dadurch gekennzeichnet, daß der Abgas- und/oder Rauchgas-Strom (c) vor Eintritt in das Fluid-Bett (221) des Fließ- und/oder Wirbel-Bett-Reaktors (220,221) durch eine Einrichtung (215) zur Abscheidung bzw. Abtrennung von Flugstaub und/oder Flugasche (d) aus dem Abgas und/oder Rauchgas (c) geführt ist.

23. Anlage nach Anspruch 20, dadurch gekennzeichnet, daß die Einrichtung der zweiten Stufe (2) zur Einbringung des mit Ammonium beladenen Ionentauschers als eine in der Temperaturzone (210a) von 250 bis 550°C der Rauchgas-Abführung (210) angeordnete, vom heißen Rauchgas (c) umströmbare, und von den Partikeln des mit Ammoniak beladenen anorganischen Ionentauschers durchströmbare Erhitzungs-Einrichtung (250) zur Desorption des Ammoniaks vom Ionentauscher ausgebildet ist, welche über mindestens eine Zuführfungsleitung (254) mit einer Einrichtung (252) zur Einbringung des desorbierten Ammoniaks in die Ammoniak-(NO$_x$)-Umsetzungszone (210b) der Rauchgas-Abführung (210) einer Verbrennungsanlage (200) verbunden ist.

24. Anlage nach einem der Ansprüche 20 bis 23, dadurch gekennzeichnet, daß die Einrichtung (230) zur Partikel-Abscheidung der zweiten Stufe (2) über eine Zuführung (232) der aus dem Abgas und/oder Rauchgas (c) abgetrennten Partikel (d) mit einer jeweils Zuführungen für Anmachwasser (241) und anorganisches Bindemittel (242) aufweisenden Immobilisier-Einrichtungen (240) zu deren endgültiger Bindung, sowie vorzugsweise Verfestigung und Kompaktierung verbunden ist.

25. Verwendung eines Verfahrens gemäß einem der Ansprüche 1 bis 19 bzw. einer Anlage gemäß einem der Ansprüche 20 bis 24 für eine mit einer Entsorgung von mit Ammoniak und/oder Ammonium belasteten Abwässern aus, insbesondere kommunalen, Abwasser-Aufbereitungs-Prozessen bzw. -Anlagen und/oder Waschwässern aus nassen Abgas- und/oder Rauchgas-Reinigungs-Prozessen bzw. -Anlagen integrierte Entsorgung von mit Stickstoffoxid belasteten Abgasen und/oder Rauchgasen von Verbrennungs-Prozessen bzw. -Anlagen, insbesondere Müll-Verbrennungs-Prozessen bzw. Anlagen.

26. Verwendung von anorganischen Ionentauschern, insbesondere natürlichen Zeolithen, zur Durchführung eines Verfahrens nach einem der Ansprüche 1 bis 19 bzw. in einer Anlage gemäß einem der Ansprüche 20 bis 24 für den im Anspruch 25 angegebenen Zweck.

Fig.3

Fig. 1

1      2

Fig. 2

13

**Europäisches Patentamt**

# EUROPÄISCHER RECHERCHENBERICHT

Nummer der Anmeldung

EP 92 89 0051

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-C-3 539 001 (RHEINISCH-WESTFÄLISCHES ELEKTRIZITÄTSWERK AG) <br> * Insgesamt * <br> --- | 1-3,20, 23,25 | B01D53/34 <br> B01J38/14 <br> C02F1/58 |
| A | DE-A-3 530 498 (SCHADE) <br><br> * Spalte 1, Zeile 64 - Spalte 2, Zeile 9; Ansprüche 1-4 * <br> --- | 1-3, 8-10,20, 26 | |
| A | US-A-4 522 727 (WEBER) <br><br> * Spalte 2, Zeile 26 - Zeile 54 * <br> * Spalte 2, Zeile 60 - Zeile 63 * <br> * Spalte 5, Zeile 17 - Zeile 22 * <br> * Spalte 5, Zeile 45 - Zeile 48; Ansprüche 1-3,18-24,29 * <br> --- | 1-3,6, 8-10, 13-15, 20,23,26 | |
| A | EP-A-0 200 834 (ADVANCED SEPARATION TECHNOLOGIES INC.) <br><br> * Seite 2, Zeile 16 - Zeile 28 * <br> * Seite 3, Zeile 19 - Seite 5, Zeile 8 * <br> * Seite 9, Zeile 14 - Zeile 20; Ansprüche 1-12 * <br> --- | 1-3, 8-10,15, 20,26 | **RECHERCHIERTE SACHGEBIETE (Int. Cl.5)** <br><br> B01D <br> B01J <br> C02F |
| A | DE-B-2 938 654 (DIDIER ENGINEERING GMBH) <br><br> * Insgesamt * <br> --- | 1-4,20, 25 | |
| A | EP-A-0 309 742 (DEUTSCHE BABCOCK ANLAGEN AG) <br><br> * Insgesamt * <br><br> ----- | 1-4,7, 20,23,25 | |

Der vorliegende Recherchenbericht wurde für alle Patentansprüche erstellt

| Recherchenort | Abschlußdatum der Recherche | Prüfer |
|---|---|---|
| DEN HAAG | 10 JUNI 1992 | EIJKENBOOM A.F. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
....................
& : Mitglied der gleichen Patentfamilie, übereinstimmendes Dokument

EPO FORM 1503 03.82 (P0403)